# EUROPÄISCHE PATENTANMELDUNG

(11) **EP 1 179 291 A1**
(43) Veröffentlichungstag der Anmeldung: **13.02.2002**
(21) Anmeldenummer: 01118779.6
(22) Anmeldetag: 09.08.2001
(51) Int. Cl.: A01D 34/00

(54) **Freischneidegerät**

(30) Priorität: 09.08.2000 DE 10038903
(71) Anmelder: GARDENA Kress + Kastner GmbH, D-89079 Ulm (DE)
(72) Erfinder: Baur, Günter, 89134 Blaustein-Arnegg (DE); Pollack, Oskar, 89312 Günzburg (DE); Kohl, Peter, 89257 Illertissen (DE)
(74) Vertreter: Patentanwälte Ruff, Wilhelm, Beier, Dauster & Partner

(57) **Zusammenfassung**

Es wird ein Freischneidegerät (1) beschrieben, das einen rotierenden Schneidkopf mit einem Schneidwerkzeug, insbesondere einen Schneidfaden und ein Getriebeelement zwischen einem Antriebsmotor und der Welle des Schneidkopfes sowie eine Halte- und Führungsstange (9) aufweist.

Zwischen dem Schutzgehäuse (3) und einem oberen Handgriff der Führungsstange (9) ist ein seitlich abkragender weiterer Handgriff (12) angeordnet, und die Motorwelle (7) ist zum Benutzer (8) hin so versetzt, dass der Gesamtschwerpunkt des Gerätes (1) etwa senkrecht unterhalb des Handgriffes (12) liegt.

## Beschreibung

Die Erfindung betrifft ein Freischneidegerät, insbesondere einen Fadenschneider, mit einem rotierenden Schneidkopf mit einem Schneidwerkzeug und einem dieses umgebenden Schutzgehäuse, mit einem Getriebeelement zwischen der Abtriebswelle eines Motors und der Antriebswelle des Schneidkopfes und mit einer Halte- und Führungseinrichtung.

Ein Freischneidegerät dieser Art ist aus der DE-U1 90 13 294 bekannt, bei der ein elektromotorisch betriebener Freischneider für Unkraut, Rasen oder dergleichen vorgesehen ist, wobei eine Schneidscheibe oder eine Fadenkassette unterhalb eines Schutzschirmes am unteren Ende einer Haltestange angebracht ist. Zwischen einem dort mit horizontaler Achse oberhalb des Schutzschirmes angebrachten Elektromotor und dem Schneidkopf ist ein Winkelgetriebe vorgesehen, das dazu dient, die Drehzahl des Elektromotors auf eine niedrigere Drehzahl der Arbeitswelle herunterzusetzen, um zum einen für den dort ebenfalls vorgesehenen Betrieb mit einer Schneidscheibe ein erhöhtes Drehmoment zu schaffen, andererseits aber auch die bei Fadenbetrieb für die starre Fadenstreckung erforderliche Drehzahl einzuhalten. Freischneidegeräte dieser Art erfordern wegen des relativ schweren Motoraggregates vom Benutzer im praktischen Einsatz im Gegensatz zu Freischneidegeräten, die am oberen Ende einer Führungsstange mit einem Antriebsmotor versehen und daher gewichtsmäßig weitgehend ausgeglichen sind, verhältnismäßig hohe Kräfte, die bei längerem Einsatz zur Ermüdung führen.

Es ist die Aufgabe der vorliegenden Erfindung, ein Freischneidegerät der eingangs genannten Art so auszubilden, dass die Handhabung des Freischneidegerätes möglichst wenig Kraftaufwand erfordert und daher den Einsatz des Freischneidegerätes auch über einen längeren Zeitraum ermöglicht.

Ausgehend von der Erkenntnis, dass zu diesem Zweck der Gesamtschwerpunkt des Gerätes möglichst nahe beim Benutzer liegen soll, so dass dieser das Gerätegewicht im wesentlichen mit hängendem Arm abfangen kann, besteht die Erfindung darin, dass zwischen Schutzgehäuse und einem oberen Handgriff ein von der Halte- und Führungseinrichtung seitlich abragender weiterer Handgriff angeordnet ist und die Motorwelle parallel zu der Schneidkopfwelle so nach hinten zum Benutzer hin versetzt ist, dass der Schwerpunkt des Gesamtgerätes in der Arbeitsstellung der Halte- und Führungseinrichtung, in der die Rotationsachse des Schneidwerkzeuges vertikal verläuft, etwa senkrecht unterhalb des weiteren Handgriffes liegt.

Diese Ausgestaltung ermöglicht die vorher erwähnte Aufnahme des Gewichtes des Gerätes durch den Benutzer mit hängendem Arm, weil es möglich wird, den Schwerpunkt des Gerätes etwa senkrecht unterhalb einer Schulter des Benutzers anzuordnen. Gleichwohl kann bei einer solchen Ausgestaltung aber der Vorteil beibehalten werden, dass der Schneidkopf mit dem Schneidfaden auf der vom Benutzer abgewandten Seite des Gerätes liegt und so größtmögliche Sicherheit gegeben ist. Durch eine solche Anordnung wird es auch möglich, wenn das Schutzgehäuse für den Schneidfaden niedrig gehalten wird, in verhältnismäßig einfacher Weise seitlich unter Hecken oder Sträucher zu fahren.

In Weiterbildung der Erfindung kann vorgesehen werden, dass die Achse der Abtriebswelle des Motors im Rotationsbereich des Schneidwerkzeuges verläuft. Auf diese Weise wird der Platzbedarf für das Gerät gegenüber Geräten mit direktem Motorantrieb nicht wesentlich vergrößert, was beispielsweise für die Lagerung und Verpackung des Gerätes von Vorteil ist. Durch die Beschränkung des horizontalen Abstandes von Schneidkopf und Motor ergeben sich auch Handhabungsvorteile.

In Weiterbildung der Erfindung kann der Motor, der zweckmäßig ein Elektromotor ist, auch so angeordnet und ausgebildet sein, dass er das Schutzgehäuse nicht nach außen überragt. Auch diese Ausgestaltung führt zu einem kompakten Aufbau.

Schließlich ist es in einfacher Weise möglich, die Motorleistung von der Motorwelle über einen Riementrieb, insbesondere einen Zahnriementrieb auf die Schneidkopfwelle zu übertragen und zwar durch die Ausgestaltung des Getriebes, das in der vorher erwähnten Art und Weise auch zu einer Drehzahlverminderung der Schneidkopfwelle führt. Es wird dadurch möglich, den Elektromotor zum einen im Schneidkopfgehäuse zu integrieren und dafür zu sorgen, dass Belastungsschläge auf den Schneidfaden bzw. die Schneidkopfwelle über den Riemen nur stark gedämpft auf die Motorwelle des Elektromotors zurückschlagen. Da der Motor dabei gegenüber der Position der Schneidkopfwelle vom Schneidbereich weg nach hinten versetzt angeordnet ist, findet keine Beeinträchtigung bei der Handhabung des Gerätes statt. Dazu kommt, dass eine sehr stabile Lagerung der Schneidkopfwelle in Schneidkopflagern möglich ist, ohne dass die Bauhöhe ungebührlich erhöht wird.

Grundsätzlich ist durch die Verwendung eines Getriebes zwischen Motor und Schneidkopfwelle der Vorteil gegeben, dass ein relativ hoch drehender Elektromotor verwendet werden kann, der in einem Arbeitspunkt betrieben wird, welcher nur zu einer geringen Drehzahlabsenkung zwischen Leerlauf und Belastung des Schneidfadens führt. Hierdurch kann die Leerlaufdrehzahl des Schneidkopfes im Vergleich zu gebräuchlichen Geräten geringer gehalten werden, was auch die Geräuschentwicklung des Gerätes im Leerlauf erheblich vermindert bzw. besondere Maßnahme zur Drehzahlsteuerung und Drehzahlverminderung des Geräts im Leerlauf erübrigt. So kann beispielsweise mit dem Einsatz solcher höher drehenden Motoren ein Betrieb des Freischneidegeräts erreicht werden, bei welchem die Leerlaufdrehzahl ohne gesonderte Regelungsmaßnahmen um höchstens 20%, insbesondere höchstens um 10% über der Lastdrehzahl liegt. Die Zwischenschaltung eines drehzahlreduzierenden Getriebeelements - insbesondere eines Zahnriemens - erhöht dabei gleichzeitig das Drehmoment von der Motorwelle zur Schneidkopfwelle. Der Einsatz des in geringem Umfang elastischen Getriebeelements in der Form eines Zahnriemens kann zudem Belastungsstöße, welche auf den Schneidkopf wirken dämpfen und somit auch die Belastung der Motorwellenlagerung verringern, wie vorstehend schon angedeutet wurde.

Die Erfindung ist in der Zeichnung anhand von Ausführungsbeispielen dargestellt und wird im folgenden erläutert. Es zeigen:
- Fig. 1: eine schematische Darstellung des neuen Freischneidegerätes, das von einem Benutzer in der Arbeitsstellung gehalten wird,
- Fig. 2: eine Darstellung ähnlich Fig. 1, jedoch während des Schneidbetriebes,
- Fig. 3: eine vergrößerte Darstellung eines Längsschnittes durch ein Freischneidegerät nach der Erfindung in einer von dem Freischneidegerät nach den Fig. 1 und 2 etwas abweichenden Form,
- Fig. 4: eine vergrößerte Seitenansicht eines Freischneidegerätes nach der Erfindung in einer anderen Ausführungsform, und
- Fig. 5: eine vergrößerte Seitenansicht eines Freischneidegerätes in einer weiteren Ausführungsform, die der Form nach Fig. 1 und 2 nahe kommt.

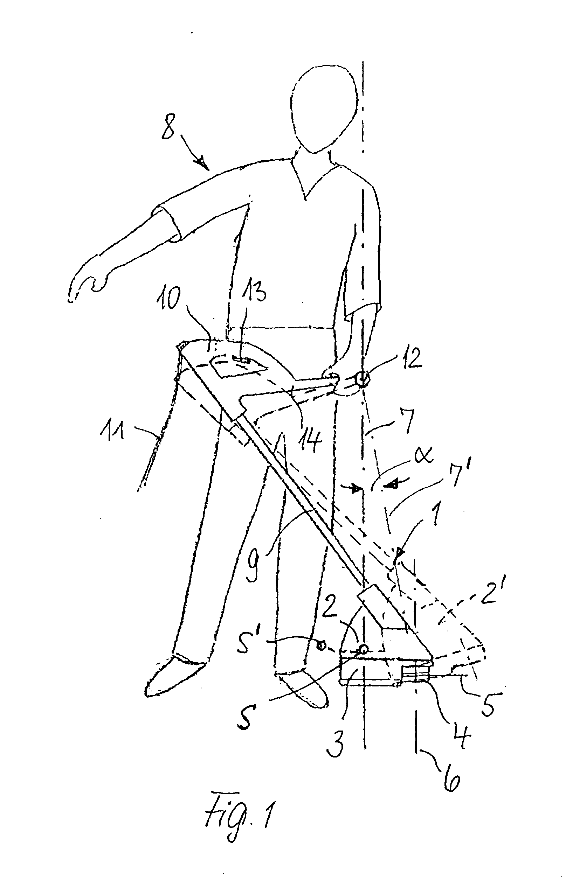

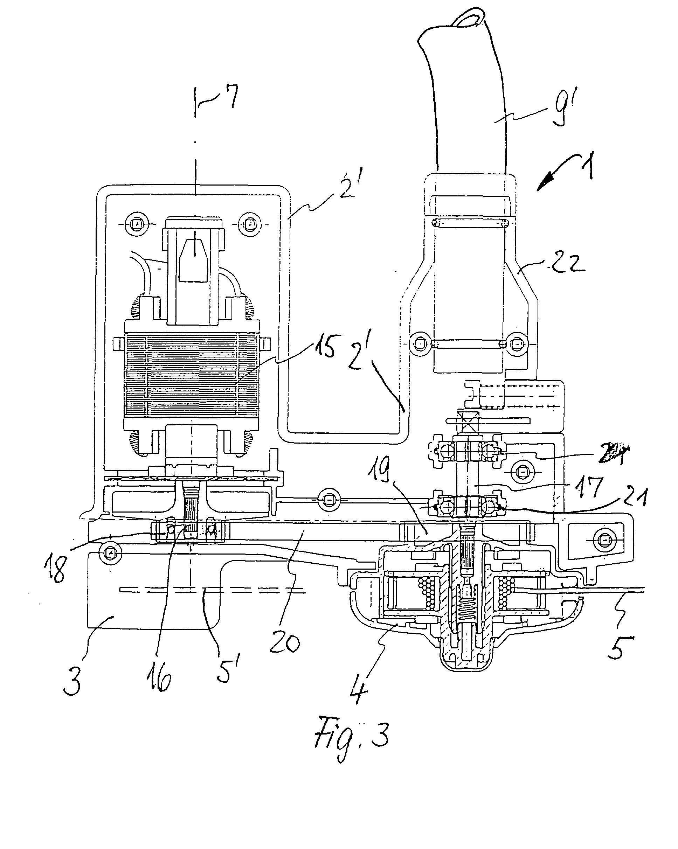

Die Fig. 1 zeigt zunächst, dass das Freischneidegerät 1 gemäß der Erfindung aus einem Gehäuse 2 mit einem integrierten Schutzgehäuse 3 besteht, welches einen von einem Schneidkopf 4 in Rotation versetzten Schneidfaden 5 umgibt. Der Schneidfaden 5 und der Schneidkopf 4 rotieren um eine vertikale Achse 6, welches im vorliegenden Fall auch die Achse der Schneidkopfwelle ist. Der Schneidkopf 4 bzw. dessen auf der Achse 6 liegende Welle, wird dabei in ähnlicher Weise, wie das später anhand von Fig. 3 erläutert werden wird, über ein Getriebe, beispielsweise in Form eines Riemens, insbesondere eines Zahnriemens, von einem Elektromotor angetrieben, dessen Abtriebswelle parallel zur Achse 6 verläuft und mit der Achse 7 zusammenfällt, die, wie Fig. 1 erkennen lässt, ganz nahe am Benutzer 8 liegt und in etwa durch den Bereich der linken Schulter des Benutzers 8 verläuft.

Das Freischneidegerät 1 besitzt eine Halte- und Führungseinrichtung in Form einer Stange 9, die am Gehäuse 2 befestigt ist und am oberen Ende mit einem Handgriff als Führungs- und Betätigungsgriff 10 versehen ist, an dem sich auch ein Schalter zur Zu- und Abschaltung der Energieversorgung des Elektromotors innerhalb des Gehäuses 2 befindet. Die Energieversorgung erfolgt dabei in bekannter Weise über ein Stromführungskabel 11, wobei ein weiteres Kabel von dem nicht gezeigten Schalter im Bereich des Handgriffes 10 aus innerhalb der hohlen Stange 9 zum Elektromotor geführt ist.

Zwischen dem Haltegriff 10 und dem Gehäuse 2 befindet sich an der Stange 9 ein seitlich abragender Arm 14 mit einem weiteren Handgriff 12, der gemäß Fig. 1 zum Tragen des Freischneidegerätes 1 und zum Halten während der Bearbeitung dient und von einer Hand der Bedienungsperson übergriffen wird. Es ist zu erkennen, dass die senkrechte Achse 7, die mit der Achse des in Fig. 1 nicht gezeigten Elektromotors zusammenfällt, durch den Bereich der Position der Hand am Handgriff 12 führt, so dass dadurch der Schwerpunkt des Gerätes 1, der sich aus den Gewichten des Schutzgehäuses 3, des Schneidkopfes 4, des - nicht gezeigten - Elektromotors der Stange 9 mit dem abragenden Arm und den beiden Handgriffen zusammensetzt, auf der Achse 7 liegt. Dies deshalb, weil das Gewicht des Elektromotors, der auf dieser Achse 7 liegt, wesentlich größer als das Gewicht des Schneidkopfes 4 und des in der Regel aus Kunststoff hergestellten Gehäuses 2, des Schutzgehäuses 3 oder anderer Teile ist, so dass die Lage des Elektromotors im wesentlichen auch verantwortlich ist für die Lage des Gesamtschwerpunktes. Die Konstruktion des neuen Freischneidegerätes ist nun so gewählt, was auch noch anhand von Fig. 3 bis 5 deutlich werden wird, dass der Gesamtschwerpunkt des Freischneidegerätes 1 in etwa unterhalb des Handgriffes 12 auf der Achse 7 liegt. Das Gewicht des Gerätes kann durch diese Ausgestaltung, bei der der Handgriff 12 entsprechend angeordnet wurde, mit hängendem Arm vom Benutzer 8 aufgenommen werden. Dies gewährleistet eine weitgehend ohne Kraftanstrengung verlaufende Handhabung während der Benutzung.

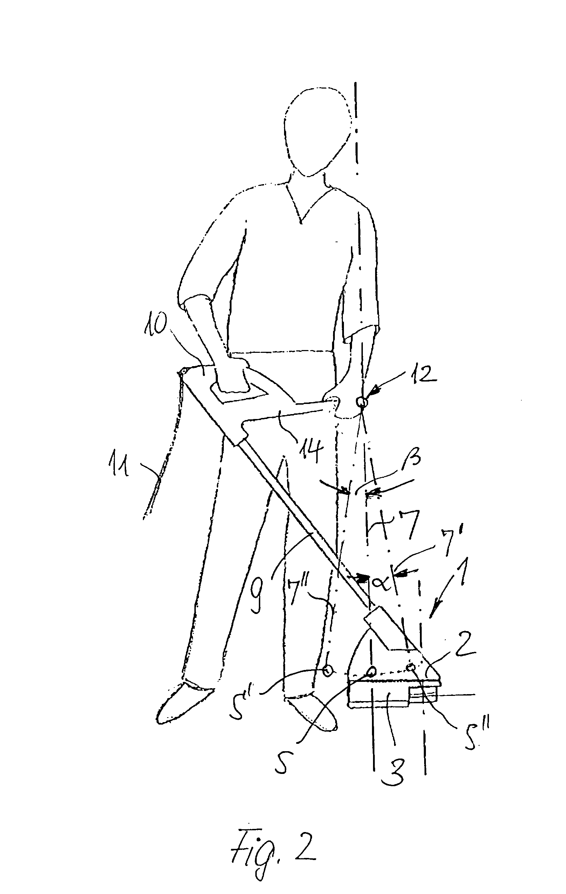

Die Fig. 2 erläutert, dass sich diese Tragfunktion des neuen Gerätes 1 während der Benutzung des Gerätes nicht verändert. Der linke Arm bleibt am Zusatzgriff und nimmt daher bei der Benutzung das Gewicht des Freischneidegerätes 1 auf. Die rechte Hand wird zum Betätigungsgriff 13 geführt.

Die Fig. 1 und 2 zeigen, dass der Handgriff 12 an dem seitlich von der Stange 9 in Richtung zur Achse 7 abragenden Arm 14 angeordnet ist, der wiederum Teil des bügelartig mit dem Arm 14 verbundenen Handgriffes 10 ist. Dieser Handgriff 12 bildet den Schwenkpunkt für das gesamte Gerät. Fig. 1 zeigt, dass der Schwerpunkt S des Gesamtgerätes so gewählt werden kann, dass er - auf der Achse 7 - senkrecht unter dem Handgriff 12 liegt. Er kann aber auch so gewählt werden, dass das Gerät im Gegenuhrzeigersinn auspendelt, wenn es lediglich am Handgriff 12 gehalten wird. In diesem Fall ist der Schwerpunkt S' für das Gesamtgerät vom Schwerpunkt S der ursprünglichen Bauart gesehen weiter nach links verlagert, was durch entsprechende Gewichtsverteilung des gesamten Gerätes erreicht werden kann und was schematisch in Fig. 1 eingezeichnet ist. Wird in diesem Fall das Gesamtgerät, dessen Schwerpunkt S' also anders gelegt ist als der ursprüngliche Schwerpunkt S, am Handgerät 12 gemäß Fig. 1 gehalten, so wird sich das Gehäuse des Gerätes in die Stellung 2' verschwenken, in der der Schwerpunkt S' nunmehr die Lage S einnimmt. Eine solche Schwerpunktlage S' des Gesamtgerätes, bei welcher das Gerät 1 abweichend von der durchgezogenen Stellung in Fig. 1 bei einhändigem Halten mit seinem Schneidkopf 4 leicht vom Benutzer 8 weg pendelt, ist eine durchaus bevorzugte Anordnung. In der in Fig. 2 dargestellten Arbeitsstellung kann nämlich dann vom Benutzer mit seiner zweiten Hand zusätzlich ein Gewichtsanteil des Geräts aufgenommen werden. Zum einen wird dadurch der hängende Arm - also der linke Arm des dargestellten Benutzers 8-geringfügig von Gewicht entlastet, zum anderen ist der am oberen Griffteil 10 und am Bedienschalter 12 ansetzende Bedienarm des Benutzers immer leicht auf Zug beansprucht (da er das Gesamtgerät um den Schwenkpunkt am Handgriff 12 im Uhrzeigersinn verschwenkt) und macht bei Betrieb des Gerätes stets auftretende Schwenkbewegungen zum Anpassen an gegebene Untergründe oder sonstige Schneidsituationen, im wesentlichen keine Lastwechsel zwischen ziehender und drückender Kraftbeaufschlagung durch, was ein gleichmäßigeres Arbeiten begünstigt. Natürlich wäre es auch möglich, den Schwerpunkt in der Ausgangslage rechts vom ursprünglichen Schwerpunkt S anzuordnen, so dass dann das Gerät beim Halten nach Fig. 1 um den Schwenkpunkt beim Handgriff 12 im Uhrzeigersinn gegenüber der durchgezogenen Stellung verschwenkt wird. Bei einer solchen Anordnung müsste eine gewisse Druckkraft während des Betriebes von der Bedienungsperson ausgeübt werden.

Es hat sich als zweckmäßig erwiesen, den Gesamtschwerpunkt S des Gerätes in der ausgezogenen Darstellung nach Fig. 1 bei senkrecht stehender Schneidachse 6 und senkrecht stehender Achse 7 des Antriebsmotor maximal um einen Winkel α von 30°, vorzugsweise aber maximal 20°, zum Benutzer 8 hinweisend, also in der Lage S' anzuordnen. Bei einer solchen Ausgestaltung pendelt sich das Gerät 1 mit seinem Gehäuse in die Lage 2' und mit seiner Motorachse in die Lage 7' aus, die vom Benutzer 8 weggerichtet ist. Es können dann die vorher erwähnten Vorteile erreicht werden. Bei einer Verlagerung des Schwerpunktes, wie in Fig. 2 mit S" angedeutet, vom Benutzer weg und bei einer demzufolge eintretenden Auspendelung des Gerätes um den Handgriff 12 zum Benutzer hin, sollten jedoch nur Winkel β auftreten, die maximal 15°, vorzugsweise maximal 10° betragen, wenn die angestrebte leichte Bearbeitungsmöglichkeit gegeben sein soll.

Das Freischneidegerät 1 kann, wie Fig. 3 zeigt, in einer besonders vorteilhaften Ausführungsform mit einem Elektromotor 15 versehen sein, der im Gehäuse 2' des Gerätes, das natürlich auch in der in den Fig. 1 und 2 gezeigten Form ausgebildet sein kann, integriert ist. Die Motorwelle 16 ist gegenüber der Schneidkopfwelle 17 parallel und seitlich versetzt. Motorwelle 16 und Schneidkopfwelle 17 tragen jeweils ein Zahnrad 18 bzw. 19, wobei diese Zahnräder 18 und 19 zur Verringerung der Drehzahl unterschiedliche Zahnzahlen aufweisen. Das Zahnrad 19 der Schneidkopfwelle 17 besitzt eine größere Zahnzahl. Diese beiden Zahnräder 18 und 19 sind durch einen Zahnriemen 20 untereinander verbunden, der die Motorleistung von der Motorwelle 16 aus auf die Schneidkopfwelle 17 überträgt. Auf der Schneidkopfwelle 17 ist der Schneidkopf 4 befestigt, der mit dem Schneidfaden 5 versehen ist. Der Schneidkopf 4 dreht sich im Betrieb mit einer gegenüber der Motorwelle 16 reduzierten Drehzahl. Beispielsweise liegt die Motordrehzahl bei mindestens 20 000 Umdrehungen pro Minute und die Schneidkopfwellendrehzahl bei lediglich 8000 bis 11.000 Umdrehungen pro Minute. Der Elektromotor 15 ist gegenüber der Position der Schneidkopfwelle 17 vom Schneidbereich weg nach hinten - zu der in Fig. 3 nicht gezeigten Bedienungsperson-versetzt angeordnet, so dass keine Beeinträchtigung bei der Handhabung des Geräts auftritt. Bei der skizzierten Anordnung ist ferner vorteilhaft, dass eine sehr stabile Lagerung der Schneidkopfwelle 17 in Schneidkopflagern 21 möglich ist, ohne dass die Bauhöhe ungebührlich erhöht werden muss. Belastungsschläge auf den Schneidfaden bzw. die Schneidkopfwelle 17 werden über den Zahnriemen 20 nur stark gedämpft auf die Motorwelle 16 des Elektromotors 15 übertragen. Das Schneidkopflager 21 und der Motor 15 sind in dem gemeinsamen Gehäuse 2' untergebracht, welches auch eine Befestigungsaufnahme 22 für eine Gerätetragstange 9' umfasst. Wie vorher bereits angedeutet wurde, kann diese Befestigungsaufnahme 22 auch in der Weise schräg am Gehäuse 2' angeordnet sein, wie das in den Fig. 1 und 2 gezeigt ist.

Die Fig. 3 zeigt auch den Rotationsbereich des Schneidfadens 5 innerhalb des Schutzgehäuses 3. Es ist zu erkennen, dass das Schutzgehäuse 3 bis in den Bereich unterhalb des Elektromotors 15 reicht und dass der Schneidfaden 5 bei seiner Rotation im Bereich unterhalb des Elektromotors 15 umläuft. Dies ist durch das Bezugszeichen 5' angedeutet. Die Motorwelle 16, beim gezeigten Ausführungsbeispiel aber auch der gesamte Elektromotor 15, liegen dabei im Rotationsbereich des Schneidfadens 5, wobei beim Ausführungsbeispiel der Motor 15 auch so angeordnet und ausgebildet ist, dass er das Schutzgehäuse 3 nicht nach außen überragt. Eine solche Ausgestaltung ergibt daher ein kompaktes Fadenschneidgerät, dessen Umfang nicht größer ist, als der eines Fadenschneidgerätes, das über eine flexible Welle durch eine Führungsstange hindurch von einem Motor, beispielsweise von einem mit Kraftstoff betriebenen Motor, angetrieben ist, der sich am oberen Ende der Halte- und Führungsstange befindet. Der Raumbedarf für das neue Freischneidegerät kann daher sehr gering, insbesondere nicht oder nicht wesentlich größer als bei vergleichbaren Geräten herkömmlichen Aufbaus, gehalten werden.

Wie aber bei der Betrachtung von Fig. 3 auch deutlich wird, liegt der Gesamtschwerpunkt des Fadenschneidgeräts 1 in jedem Fall im Bereich der Achse 7, weil sich hier der relativ schwere Elektromotor befindet, dessen Antriebskraft über den Zahnriemen 20 zu der seitlich versetzt angeordneten Schneidkopfwelle 17 übertragen wird. Diese Ausgestaltung ermöglicht daher die anhand der Fig. 1 und 2 beschriebene vorteilhafte Handhabung.

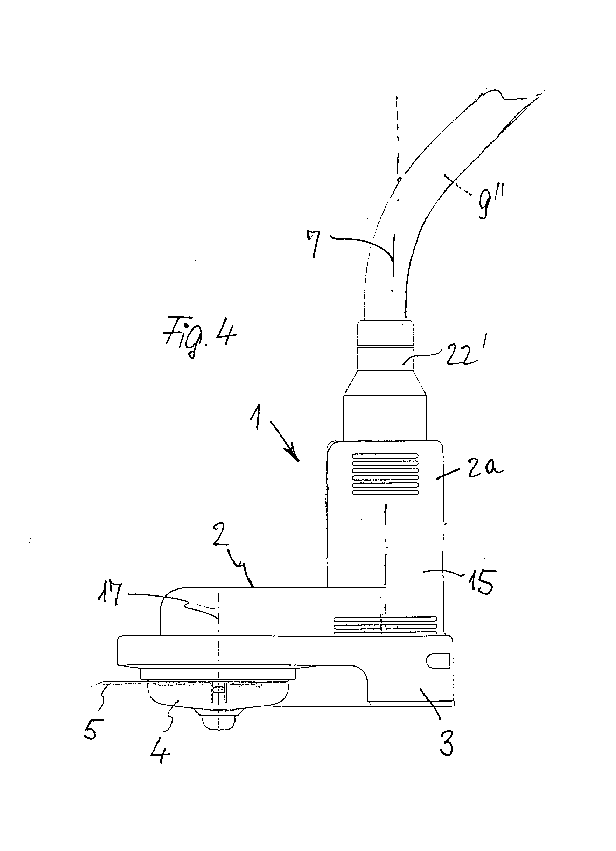

Die Fig. 4 zeigt eine Ausgestaltung, bei der das Gehäuse 2 relativ flach ausgebildet ist. Auch hier sind jedoch die Achsen 7 und 17 parallel zueinander so versetzt, dass der Gesamtschwerpunkt des Freischneidegerätes in etwa in der vertikalen Achse 7 liegt. Auch in diesem Fall ist das Gehäuse des Elektromotors 15 in das Gehäuse 2 des Gerätes integriert, und das Schutzgehäuse 3 reicht bis in den Bereich unterhalb des Elektromotors 15, der also auch hier dieses Schutzgehäuse 3 seitlich nicht überragt und im Rotationsbereich des Schneidfadens 5 liegt. Die in Fig. 4 gezeigte Ausführungsform weist den Vorteil auf, dass die vom Benutzer abgewandte Seite des Gehäuses 2 sehr flach ist, so dass damit ohne Probleme seitlich auch unter Hecken oder dergleichen eine Mähbearbeitung möglich ist. Die Führungs- und Haltestange 9" wird hier in einer Befestigungsmuffe 22' gehalten, die mit dem Gehäuseteil 2a fluchtet, in dem der Elektromotor 15 angebracht ist. Auch bei dieser Ausführungsform ist an der Führungsstange 9" der weitere Handgriff 12 in der in den Fig. 1 und 2 gezeigten Weise so angebracht, dass er auf der Achse 7 liegt.

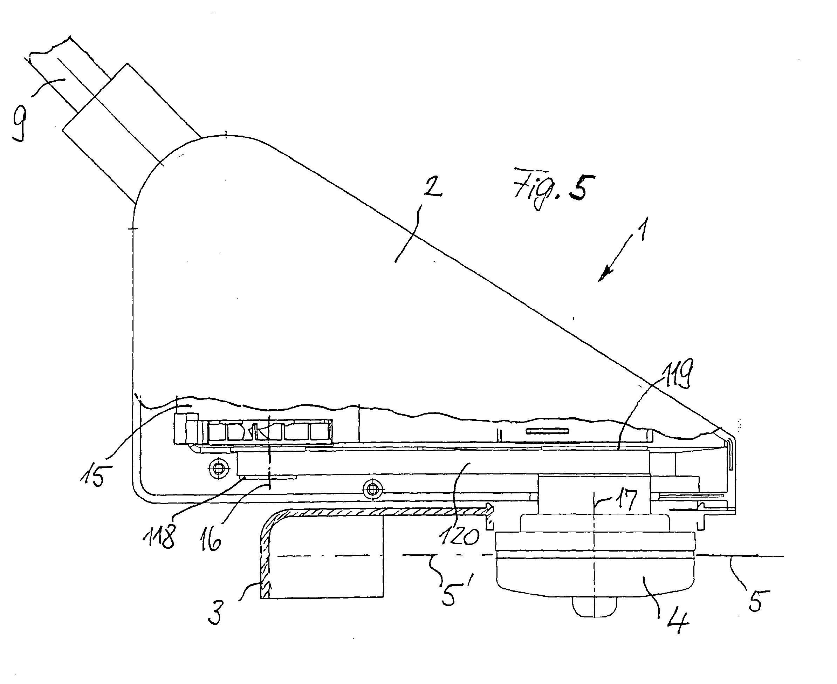

Fig. 5 schließlich zeigt ein Gehäuse 2, das in seiner Form jenem der Fig. 1 und 2 recht nahe kommt. Hier ist der Elektromotor 15 an seiner Abtriebswelle 16 mit einer Riemenscheibe 118 versehen, die einen Riemen 120 aufnimmt, der die Motorleistung auf eine weitere Riemenscheibe 119 überträgt, die auf der Antriebsachse 17 des Schneidkopfes 4 befestigt ist, der auch hier mit einem Schneidfaden 5 versehen ist. Die Drehachse 16 des Motors 15 liegt auch hier im Rotationsbereich des Schneidfadens 5. Denkbar wäre aber auch, dass sie bis zu 30 % des Abstandes zwischen Drehachse 16 und Antriebsachse 17 des Schneidkopfes über den Rotationsbereich des Schneidwerkzeuges hinausragt.

Die in den Fig. 3 bis 5 beschriebenen Ausführungsbeispiele sehen als Bearbeitungswerkzeug einen Schneidfaden 5 vor. Denkbar wäre es aber auch, den Schneidkopf 4 mit einer Schneidscheibe zu bestücken, wenn dies zweckmäßig erscheinen sollte. Die Ausführungsform mit einem Schneidfaden allerdings gewährleistet, wegen des geringen Fadengewichts, in sehr viel einfacherer Weise, dass der Gesamtschwerpunkt des Gerätes 1 auch in etwa mit der Achse 7 zusammenfällt, die in etwa auch der Motorachse entspricht.

## Patentansprüche

1. Freischneidegerät, insbesondere Fadenschneider, mit einem rotierenden Schneidkopf mit einem Schneidwerkzeug und einem dieses umgebenden Schutzgehäuse (3), mit einem Getriebeelement (20) zwischen der Abtriebswelle eines Motors und der Antriebswelle des Schneidkopfes und mit einer Halte- und Führungseinrichtung (9),
**dadurch gekennzeichnet, dass**
zwischen Schutzgehäuse (3) und einem oberen Handgriff (10) ein seitlich abragender weiterer Handgriff (12) angeordnet ist und die Motorachse (7) parallel zu der Achse (6) der Schneidewelle so nach hinten zum Benutzer hin versetzt ist, dass der Schwerpunkt (5) des Gesamtgerätes (1) in der Arbeitsstellung der Halte- und Führungseinrichtung, in der die Rotationsachse (6) des Schneidwerkzeuges vertikal verläuft, etwa senkrecht unterhalb des weiteren Handgriffes (12) liegt.

2. Freischneidegerät nach Anspruch 1, **dadurch gekennzeichnet, dass** die Verbindungsgerade zwischen Schwerpunkt (S) und weiterem Handgriff (12) nicht mehr als 15°, insbesondere nicht mehr als 10° von der Richtung der Motorachse (7) und der dazu parallelen Achse (6) der Schneidwelle abweicht.

3. Freischneidegerät nach Anspruch 1, **dadurch gekennzeichnet, dass** die Achse der Abtriebswelle (16) des Motors (15) im Rotationsbereich des Schneidwerkzeuges (5) verläuft.

4. Freischneidegerät nach Anspruch 1 **dadurch gekennzeichnet, dass** der Motor (15) so angeordnet und ausgebildet ist, dass er das Schutzgehäuse (3) nicht nach außen überragt.

5. Freischneidegerät nach Anspruch 1, **dadurch gekennzeichnet, dass** die Motorleistung von der Motorwelle (16) über einen Riementrieb (20) auf die Schneidkopfwelle (17) übertragen ist.
